# EUROPEAN PATENT APPLICATION

(11) **EP 4 024 514 A1**
(43) Date of publication of application: **06.07.2022**
(21) Application number: 20925038.0
(22) Date of filing: 30.10.2020
(51) Int. Cl.: H01M 4/36, H01M 10/0562

(54) **SOLID-STATE BATTERY, PREPARATION METHOD THEREFOR AND APPLICATION THEREOF**

(30) Priority: 18.03.2020 CN 202010191266
(71) Applicant: SVOLT ENERGY TECHNOLOGY CO., LTD, Changzhou, Jiangsu 213200 (CN)
(72) Inventor: ZHU, Jinxin, hangzhou, Jiangsu 213200 (CN); ZHOU, Longjie, hangzhou, Jiangsu 213200 (CN); MA, Zhonglong, hangzhou, Jiangsu 213200 (CN)
(74) Representative: Plougmann Vingtoft a/s
(86) International application number: PCT/CN2020/125423
(87) International publication number: WO 2021/184768

(57) **Abstract**

Provided is a solid-state battery, comprising a positive electrode plate, a negative electrode plate, and a solid-state sulfide electrolyte layer provided between the two, wherein the positive electrode plate comprises a positive electrode composite material, a solid-state sulfide electrolyte, and a conductive agent, the positive electrode composite material comprises a positive electrode material and an LATP coating layer formed on the surface of the positive electrode material. The LATP coating layer is obtained by using a lithium salt remaining on the surface of the positive electrode material as a directing agent and a lithium source, and by inducing the lithium source, an aluminum source, a titanium source, and a phosphorous source by means of in-situ synthesis.

## Description

### TECHNICAL FIELD

The present disclosure relates to the technical field of lithium batteries, for example, to a solid-state battery, a preparation method therefor and an application thereof.

### BACKGROUND

Solid-state lithium batteries, due to their high energy density and excellent safety performance, are widely regarded as a promising development direction for various energy storage devices of the next generation. However, an interface between an electrode plate and a solid-state electrolyte remains a key problem that hinders the industrialization and commercial application of the solid-state lithium batteries. For typical solid-state lithium batteries, the most common and difficult problem is how to achieve and maintain tight solid-solid phase interface contact. Meanwhile, different types of solid-state electrolytes also present different problems, which depend on the inherent properties of adjacent solid components.

A solid-state sulfide electrolyte is a type of solid-state electrolyte, that is, an oxide electrolyte where oxygen is replaced with sulfur. S has lower electronegativity than O and has lower binding energy with Li⁺, so that Li⁺ can move more freely. Of all the solid-state electrolytes, the solid-state sulfide electrolyte has highest lithium ion conductivity. Additionally, the solid-state sulfide electrolyte is also characterized by its mechanical performance. Such materials exhibit the property of plastic deformation under mechanical pressure and such flexibility makes it possible to prepare a compact interface. In recent years, the studies on the solid-state sulfide electrolyte have focused on an LPSCL system that has good lithium ion conductivity, electrochemical stability and mechanical performance. Since Li⁺ has a chemical potential difference between an oxide positive electrode and a solid-state sulfide electrolyte, Li⁺ might migrate from the electrolyte to the positive electrode, forming a surface charge layer (SCL) on each of two sides. However, due to the single ion conductivity of the electrolyte, the SCL will remain on the side of the electrolyte and the resulting SCL will significantly reduce the transport of Li⁺ and cause high polarization.

In the related art, some effective strategies are proposed to prevent the formation of the SCL. However, an existing method cannot well solve the problem of poor electrochemical performance, especially poor cycle performance, of sulfide solid-state batteries. Moreover, in the related art, the use of a material with poor lithium ion conductivity or an insulator material for coating further results in poor electrochemical performance of a positive electrode material. For example, the most successful method at present is coating the positive electrode material with LiNbO₃ or the like. However, due to relatively low ion conductivity of LiNbO₃, such coating generally results in an insufficient discharge capacity at a relatively high current rate, especially in a high-nickel ternary positive electrode system. Therefore, this method does not succeed, and other methods should be considered.

### SUMMARY

The following is a summary of the subject matter described in detail herein. This summary is not intended to limit the scope of the claims.

The present disclosure provides a solid-state battery, a preparation method therefor and an application thereof. The solid-state battery of the present disclosure improves the conductivity, cycle performance, rate capability, safety performance, service life and the like of a sulfide solid-state battery so that the sulfide solid-state battery has a good rate capability and good cycle performance at both room temperature and a high temperature.

In an embodiment, the present disclosure provides a solid-state battery, comprising:
a positive electrode plate, comprising a positive electrode composite material, a solid-state sulfide electrolyte and a conductive agent, where the positive electrode composite material includes a positive electrode material and a lithium aluminum titanium phosphate (LATP) coating layer formed on a surface of the positive electrode material;
a solid-state sulfide electrolyte layer; and
a negative electrode plate, and the solid-state sulfide electrolyte layer is disposed between the positive electrode plate and the negative electrode plate.

negative electrodeWherein, the LATP coating layer is obtained in a manner that a lithium source, an aluminum source, a titanium source and a phosphorus source are induced by an in-situ synthesis method using a lithium salt remaining on the surface of the positive electrode material as a directing agent and the lithium source.

In the positive electrode plate of the present disclosure, the LATP (that is, lithium aluminum titanium phosphate) coating layer is formed on the surface of the positive electrode material. The coating layer has relatively high ion conductivity and excellent chemical and thermodynamic stability and can greatly reduce the reactivity between the solid-state sulfide electrolyte layer and the positive electrode material, thereby significantly reducing the effect of a surface charge layer and ensuring the rapid migration of lithium ions.

In the positive electrode plate of the present disclosure, the lithium salt remaining in a synthesis process of the positive electrode material is used as the directing agent (and also as the lithium source) for inducing the lithium source, the aluminum source, the titanium source and the phosphorus source so as to synthesize LATP in situ on the surface of positive electrode material particles in a manner similar to "dendrite growth", which is low in cost and easy to operate, makes the formed LATP uniformly dispersed on the surface of positive electrode material particles and can effectively control the thickness of the coating layer, achieving a nanoscale coating effect. Compared with that with no LATP coating layer formed on the surface of the positive electrode material, the solid-state battery in the present disclosure has a higher charge/discharge capacity, a higher first effect, a higher capacity retention ratio, better cycle stability, a better rate capability and better cycle performance at normal temperature and a high temperature (70 °C).

In an embodiment, a content of the LATP coating layer is 0.01-15wt% of the positive electrode material, for example, 0.01wt%, 0.05wt%, 0.1wt%, 0.3wt%, 0.5wt%, 0.8wt%, 1wt%, 2wt%, 3wt%, 5wt%, 7wt%, 8wt%, 10wt%, 12wt%, 13wt%, 15wt% or the like.

In an embodiment, the LATP coating layer has a thickness of 1 nm to 5 µm, for example, 1 nm, 10 nm, 20 nm, 30 nm, 40 nm, 50 nm, 60 nm, 80 nm, 120 nm, 150 nm, 200 nm, 300 nm, 400 nm, 450 nm, 550 nm, 600 nm, 800 nm, 1 µm, 1.2 µm, 1.5 µm, 2 µm, 2.3 µm, 2.4 µm, 2.6 µm, 3 µm, 3.5 µm, 4 µm, 5 µm or the like, preferably, 30-80 nm.

In an embodiment, the LATP coating layer includes at least one of Li_{1.3}Al_{0.3}Ti_{1.7}(PO₄)₃, Li₃PO₄, LiH₂PO₄, LiTi₂(PO₄)₃ and LiPO₃.

In an embodiment, the LATP is Li_{1.3}Al_{0.3}Ti_{1.7}(PO₄)₃.

In an embodiment, the positive electrode material includes AₐM_{b}O_{y}, where 0 < a ≤ 6, 0 < b ≤ 4, 2 ≤ y ≤ 5, A is an alkali metal element including lithium, and M is at least one selected from a transition metal, magnesium, calcium, boron, barium, aluminum and a boron element.

In an embodiment, the transition metal is at least one selected from titanium, vanadium, chromium, molybdenum, tungsten, manganese, iron, cobalt, nickel, palladium, platinum, copper, silver, gold, zinc, cadmium and copper.

In an embodiment, the positive electrode material includes at least one selected from LiₓMn₂O₄, LiₓMnO₂, LiₓCoO₂, LiₓV₃O₈, LiₓNiO₂, LiₓNi_{y}Co_{z}O₂, LiₓNi_{y}Mn_{z}O₂ and LiₓCo_{y}Mn_{z}O₂, V₂O₅, V₅S₈, TiS₂, V₂S₅, NbSe₃ and MoS₂, where 0.1 < x ≤ 2, 0 < y ≤ 2, 0 < z ≤ 2, and 0.5 < y+z ≤ 2. It is to be noted that x, y and z are present in multiple substances described above and specific values of x, y and z are selected independently within the preceding ranges for different substances.

In an embodiment, the positive electrode material is a high-nickel nickel-cobalt-manganese ternary positive electrode material. The high-nickel nickel-cobalt-manganese ternary positive electrode material refers to a nickel-cobalt-manganese ternary material where a molar fraction of nickel is greater than or equal to 0.6.

In an embodiment, the solid-state sulfide electrolyte layer includes at least one of LiₖPₘSₙCl_{α}Br_{β}I_{γ}, Li₇P₃S₁₁, Li_{9.54}Si_{1.74}P_{1.44}S_{11.7}Cl_{0.3}, Li₁₀SnP₂S₁₂, Li₆PS₅Cl, Li₂S-P₂S₅, Li₃PS₄, 75Li₂S-25P₂S₅, 90Li₃PS₄-10ZnO, 9Li₂S-3P₂S₅-1Ni₃S₂, 60Li₂S-25P₂S₅-10Li₃N, 78Li₂S-22P₂S₅, 80(0.7Li₂S-0.3P₂S₅)-20LiI, 99(70Li₂S-30P₂S₅)-1Li₂ZrO₃, Li₇P_{2.9}S_{10.85}Mo_{0.01}, Li₇P_{2.9}S_{10.85}Mo_{0.01}, 70Li₂S-29P₂S₅-1Li₃PO₄, 70Li₂S-29P₂S₅-1P₂S₃, 90(0.7Li₂S-0.3P₂S₅)-10LiBr, 75Li₂S-23P₂S₅-2P₂Se₅, 95(0.8Li₂S-0.2P₂S₅)-5LiI, Li_{10.35}[Sn_{0.27}Si_{1.08}]P_{1.65}S₁₂, Li₁₀GeP₂S₁₂ and Li₁₁AlP₂S₁₂, wherein, in LiₖPₘSₙCl_{α}Br_{β}I_{γ}, 5 < k ≤ 6, 0.5 < m ≤ 1.5, 4 < n ≤ 6, 0 < α < 1, 0 ≤ β < 1, 0 ≤ γ < 1, α + β + γ = 1, and β and γ are not 0 at the same time.

The embodiment of the present disclosure may include LiₖPₘSₙCl_{α}Br_{β}I_{γ}. The solid-state sulfide electrolyte where part of Cl in the electrolyte is replaced with at least one of Br and I which have lower electronegativity can further reduce the reactivity between the solid-state sulfide electrolyte layer and the positive electrode material, has no significant negative effect on ion conductivity, and has relatively high conductivity, good mechanical properties, and excellent chemical and thermodynamic stability so that the rate capability and cycle performance of the solid-state battery at room temperature and a high temperature can be further improved.

In an embodiment, in LiₖPₘSₙCl_{α}Br_{β}I_{γ}, a coefficient ratio of α, β and γ is (4-10):(0-5):(0-5).

In an embodiment, the solid-state sulfide electrolyte layer is a layer of LiₖPₘSₙCl_{α}Br_{β}I_{γ}.

In an embodiment, the solid-state sulfide electrolyte layer is a layer of Li₆PS₅Cl_{α}Br_{β}I_{γ}.

In an embodiment, the negative electrode plate is at least one of a lithium plate, a lithium indium alloy, graphite, silicon, a silicon alloy and silicon dioxide. For example, the negative electrode plate may be a mixture of silicon dioxide and graphite or a mixture of silicon dioxide, graphite and silicon. Wherein, the lithium indium alloy may be expressed as a Li-In alloy.

In an embodiment, the present disclosure provides a method for preparing the solid-state battery. The method includes the following steps:
(1) mixing a hydroxide precursor of a positive electrode material and a first lithium salt , and performing a first calcination so as to obtain the positive electrode material, wherein, the first lithium salt remains on a surface of the positive electrode material;
(2) mixing the positive electrode material with a second lithium salt, Al₂O₃, TiO₂ and a phosphorus salt, and performing a second calcination so as to form an LATP coating layer on the surface of the positive electrode material to obtain a positive electrode composite material;
(3) providing a solid-state sulfide electrolyte;
(4) preparing a positive electrode plate by mixing the positive electrode composite material, the solid-state sulfide electrolyte and a conductive agent;
(5) preparing a solid-state sulfide electrolyte layer; and
(6) preparing the solid-state battery by using the positive electrode plate, the solid-state sulfide electrolyte layer and a negative electrode plate .

In an embodiment, in step (1), a molar ratio of the first lithium salt to the precursor is (1-1.2):1, for example, 1, 1.05, 1.1, 1.2 or the like.

In an embodiment, in step (1), the first calcination is performed at 700-950 °C for 5-24 h. The temperature is, for example, 700 °C, 710 °C, 720 °C, 750 °C, 780 °C, 800 °C, 850 °C, 900 °C or 950 °C. The time is, for example, 5 h, 7 h, 8 h, 10 h, 12 h, 15 h, 18 h, 20 h, 24 h or the like.

In an embodiment, in step (1), a molar ratio in percentage of the first lithium salt remaining on the surface of the positive electrode material to the positive electrode material is 0.01-0.2%, for example, 0.01%, 0.05%, 0.1%, 0.12%, 0.15%, 0.2% or the like.

In an embodiment, in step (2), the phosphorus salt is ammonium phosphate, and a mass ratio of Al₂O₃, TiO₂ and ammonium phosphate is (0.02-0.04):(0.3-0.45):(1.13-1.17), for example, 0.02:0.4:1.15, 0.03:0.3:1.16, 0.04:0.45:1.13 or the like.

In an embodiment, in step (2), the positive electrode composite material has a particle size of not greater than 3 microns, for example, 3 microns, 2.5 microns, 2.2 microns, 2 microns, 1.5 microns or the like. The particle size refers to an average particle size.

In an embodiment, in step (2), the second calcination is performed at 400-900 °C for 4-12 h in an O₂/N₂ atmosphere with an oxygen content of 0.5-20v%. In this embodiment, the second calcination is performed at a temperature of, for example, 400 °C, 450 °C, 500 °C, 600 °C, 650 °C, 700 °C, 800 °C, 900 °C or the like, and the second calcination lasts for, for example, 4 h, 5 h, 6 h, 8 h, 9 h, 10 h, 11 h, 12 h or the like. The oxygen content in the O₂/N₂ atmosphere is, for example, 0.5v%, 1v%, 1.5v%, 2v%, 3v%, 5v%, 8v%, 10v%, 12v%, 15v%, 17.5v%, 19v%, 20v% or the like.

In an embodiment, in step (3), a lithium salt, a phosphorus salt, a sulfur salt and a salt having a halogen element are mixed and subjected to third calcination in an inert atmosphere so as to obtain the solid-state sulfide electrolyte LiₖPₘSₙCl_{α}Br_{β}I_{γ}.

In an embodiment, the third calcination is performed at 200-800 °C for 2-4 h at a temperature ramp rate of 0.2-5 °C/min. In this embodiment, the third calcination is performed at a temperature ramp rate of, for example, 0.2 °C/min, 0.5 °C/min, 0.7 °C/min, 1 °C/min, 1.5 °C/min, 2 °C/min, 2.5 °C/min, 3 °C/min, 4 °C/min, 5 °C/min or the like. The third calcination is performed at a temperature of, for example, 200 °C, 300 °C, 400 °C, 450 °C, 500 °C, 600 °C, 700 °C, 800 °C or the like. The third calcination lasts for, for example, 2 h, 2.5 h, 3 h, 3.5 h, 4 h or the like.

In an embodiment, in step (4), a mass ratio of the solid-state sulfide electrolyte to the positive electrode composite material is 1:(7-10), for example, 1:7, 1:8, 1:8.5, 1:9, 1:10 or the like.

In an embodiment, in step (4), the mass ratio of the solid-state sulfide electrolyte to the positive electrode composite material is 1:(8-9).

In an embodiment, in step (4), the positive electrode composite material, LiₖPₘSₙCl_{α}Br_{β}I_{γ} and the conductive agent are mixed so as to prepare the positive electrode plate; and in step (5), LiₖPₘSₙCl_{α}Br_{β}I_{γ} is used for preparing the solid-state sulfide electrolyte layer.

In an embodiment, the present disclosure provides a vehicle having the solid-state battery or a solid-state battery prepared by the method. The vehicle of the present disclosure has higher safety and a longer battery life, improving the competitiveness of the vehicle.

### BRIEF DESCRIPTION OF DRAWINGS

The drawings are used to provide a further understanding of technical solutions of the present disclosure and constitute a part of the specification. The drawings are intended to explain the technical solutions of the present disclosure in conjunction with embodiments of the present application and not to limit the technical solutions of the present disclosure.
FIG. 1 is a flowchart of a method for preparing a solid-state battery according to an embodiment of the present disclosure.
FIG. 2 is a scanning electron microscope (SEM) image of a positive electrode composite material prepared in an example of the present disclosure.
FIG. 3 is another SEM image of a positive electrode composite material prepared in an example of the present disclosure.
FIG. 4 is an SEM image of a positive electrode composite material prepared in Comparative Example 1 of the present disclosure.
FIG. 5 is another SEM image of a positive electrode composite material prepared in Comparative Example 1 of the present disclosure.
FIG. 6 is an energy-dispersive X-ray spectroscopy (EDS) diagram of a positive electrode composite material prepared in an example of the present disclosure.
FIGS. 7a and 7g are X-ray photoelectron spectroscopy (XPS) diagrams of a positive electrode composite material prepared in an example of the present disclosure.
FIG. 8 is a diagram illustrating tested initial performance of a solid-state battery prepared in an example of the present disclosure.
FIG. 9 is a diagram illustrating tested initial performance of solid-state batteries prepared in an example and Comparative Example 1 of the present disclosure.
FIG. 10 is a diagram illustrating tested cycle performance of a solid-state battery prepared in an example of the present disclosure.
FIG. 11 is a diagram illustrating tested cycle performance of solid-state batteries prepared in an example and Comparative Example 1 of the present disclosure.

In the figures, TM is a transition metal and RT is room temperature which is 25 °C.

### DETAILED DESCRIPTION

Technical solutions of the present disclosure are further described below through embodiments in conjunction with drawings.

In an embodiment, the present disclosure provides a solid-state battery. The solid-state battery includes a positive electrode plate, a solid-state sulfide electrolyte layer and a negative electrode plate. The positive electrode plate includes a positive electrode composite material, a solid-state sulfide electrolyte and a conductive agent, where the positive electrode composite material includes a positive electrode material and an LATP coating layer formed on a surface of the positive electrode material. The solid-state sulfide electrolyte layer is disposed between the positive electrode plate and the negative electrode plate. Wherein, the LATP coating layer is obtained in a manner that a lithium source, an aluminum source, a titanium source and a phosphorus source are induced by an in-situ synthesis method using a lithium salt remaining on the surface of the positive electrode material as a directing agent and the lithium source.

The solid-state battery has a higher charge/discharge capacity, a higher initial efficiency, a higher capacity retention ratio, better cycle stability, a better rate capability and better cycle performance at normal temperature and a high temperature (70 °C).

The solid-state battery in the preceding embodiment of the present disclosure is described in detail below mainly from three aspects of the positive electrode plate, the solid-state sulfide electrolyte layer and the negative electrode plate.

### Positive electrode plate

The positive electrode plate includes the positive electrode composite material, the solid-state sulfide electrolyte and the conductive agent. The positive electrode composite material includes the positive electrode material and the LATP (that is, lithium aluminum titanium phosphate) coating layer formed on the surface of the positive electrode material. Wherein, the LATP coating layer is obtained in a manner that the lithium source, the aluminum source, the titanium source and the phosphorus source are induced by the in-situ synthesis method using the lithium salt remaining on the surface of the positive electrode material as the directing agent and the lithium source.

Wherein, the LATP coating layer has relatively high ion conductivity and excellent chemical and thermodynamic stability and can greatly reduce the reactivity between the solid-state sulfide electrolyte layer and the positive electrode material, thereby significantly reducing the effect of a surface charge layer and ensuring the rapid migration of lithium ions. In addition, the lithium salt remaining in a synthesis process of the positive electrode material is used as the directing agent (and also as the lithium source) for inducing the lithium source, the aluminum source, the titanium source and the phosphorus source so as to synthesize LATP in situ on the surface of positive electrode material particles in a manner similar to "dendrite growth", which is low in cost and easy to operate, makes the formed LATP uniformly dispersed on the surface of positive electrode material particles and can effectively control the thickness of the coating layer, achieving a nanoscale coating effect.

In an embodiment, the LATP coating layer may have a thickness of 1 nm to 5 µm, for example, 10 nm, 100 nm, 200 nm, 500nm, 1 µm, 2 µm, 5 µm or the like. Inventors have found that too small a thickness of the LATP coating layer results in a relatively poor coating effect of the positive electrode material and has an insignificant effect of reducing the reactivity between the solid-state sulfide electrolyte layer and the positive electrode material; and too large a thickness of the LATP coating layer will significantly reduce a transport speed of lithium ions, which affects the electrochemical performance of the solid-state battery. In the present disclosure, lithium titanium phosphate (LTP) substituted with aluminum is used as a coating material on the surface of the positive electrode material and the thickness of the LATP coating layer is controlled to be 1 nm to 5 µm, which can effectively prevent a negative effect of too large a thickness of the coating layer on the transport of lithium ions, significantly reduce the effect of the surface charge layer, ensure the rapid migration of lithium ions, and reduce the polarization of the battery.

In an embodiment, the LATP coating layer may have a thickness of 30 nm to 80 nm, for example, 30 nm, 40 nm, 50 nm, 60 nm, 70 nm, 80 nm or the like. The inventors have also found that a nanoscale thickness of the LATP coating layer, especially about 50 nm, results in a lower effect of the surface charge layer and a higher migration speed of lithium ions, which can further improve the rate capability and cycle performance of the solid-state battery.

In an embodiment, a content of the LATP coating layer may be 0.01-15wt% of the positive electrode material, for example, 0.1wt%, 0.5wt%, 1wt%, 3wt%, 5wt%, 7wt%, 9wt%, 12wt%, 15wt% or the like. The inventors have found that the thickness of the LATP coating layer can be adjusted by controlling a mass ratio of the LATP coating layer to the positive electrode material. In the present disclosure, the thickness of the LATP coating layer may be maintained within a range of 1 nm to 5 µm by controlling the content of the LATP coating layer to be the preceding content, which can significantly reduce the effect of the surface charge layer between the positive electrode plate and a solid-state electrolyte layer, ensure the rapid migration of lithium ions, and reduce the polarization of the battery.

In an embodiment, under the same conditions, compared with NCM811 with no coating, an all-solid-state battery where the content of the LATP coating layer is about 1wt% of the positive electrode material NCM811 has significantly improved electrochemical performance at room temperature and a high temperature (70 °C): a higher charge/discharge capacity, a higher first effect, a higher capacity retention ratio, better cycle stability, a better rate capability and better cycle performance.

In an embodiment, the LATP coating layer may include at least one selected from Li_{1.3}Al_{0.3}Ti_{1.7}(PO₄)₃, Li₃PO₄, LiH₂PO₄, LiTi₂(PO₄)₃ and LiPO₃.

In an embodiment, LATP may be Li_{1.3}Al_{0.3}Ti_{1.7}(PO₄)₃. Li_{1.3}Al_{0.3}Ti_{1.7}(PO₄)₃ has extremely high ion conductivity, extremely low porosity, excellent chemical and thermodynamic stability and three-dimensional skeleton dimensions that are most suitable for the migration of lithium ions. Therefore, the use of Li_{1.3}Al_{0.3}Ti_{1.7}(PO₄)₃ as a material of the coating layer can further reduce the effect of the surface charge layer between the positive electrode plate and the solid-state electrolyte layer and the polarization of the battery and ensure the rapid migration of lithium ions, which can further improve the rate capability and cycle performance of the solid-state battery.

In an embodiment, the positive electrode material may include AₐM_{b}O_{y}, wherein 0 < a ≤ 6, 0 < b ≤ 4, 2 ≤ y ≤ 5, A is an alkali metal element including lithium, and M is at least one selected from a transition metal, magnesium, calcium, boron, barium, aluminum and a boron element.

In an embodiment, the transition metal is at least one selected from titanium, vanadium, chromium, molybdenum, tungsten, manganese, iron, cobalt, nickel, palladium, platinum, copper, silver, gold, zinc, cadmium and copper.

In an embodiment, the positive electrode material may include at least one selected from LiₓMn₂O₄, LiₓMnO₂, LiₓCoO₂, LiₓV₃O₈, LiₓNiO₂, LiₓNi_{y}Co_{z}O₂, LiₓNi_{y}Mn_{z}O₂ and LiₓCo_{y}Mn_{z}O₂, wherein 0.1 < x ≤ 2, 0 < y ≤ 2, 0 < z ≤ 2, and 0.5 < y+z ≤ 2. Therefore, the rate capability and cycle performance of the solid-state battery can be further improved.

In an embodiment, the positive electrode material may include at least one selected from LiₓMn₂O₄, LiₓMnO₂, LiₓCoO₂, LiₓV₃O₈, LiₓNiO₂, LiₓNi_{y}Co_{z}O₂, LiₓNi_{y}Mn_{z}O₂ and LiₓCo_{y}Mn_{z}O₂, V₂O₅, V₅S₈, TiS₂, V₂S₅, NbSe₃ and MoS₂, wherein 0.1 < x ≤ 2, 0 < y ≤ 2, 0 < z ≤ 2, and 0.5 < y+z ≤ 2.

In an embodiment, the positive electrode material is a high-nickel nickel-cobalt-manganese ternary positive electrode material such as NCM811. The high-nickel nickel-cobalt-manganese ternary positive electrode material has the advantages of a high specific capacity, a low cost, good safety and the like and can further improve the overall performance of the solid-state battery.

### Solid-state sulfide electrolyte layer

In an embodiment, the solid-state sulfide electrolyte layer may be at least one of a solid-state sulfide electrolyte containing a halogen element or a solid-state sulfide electrolyte containing no halogen element.

In an embodiment, the solid-state sulfide electrolyte containing the halogen element may include LiₖPₘSₙCl_{α}Br_{β}I_{γ}, wherein 5 < k ≤ 6, 0.5 < m ≤ 1.5, 4 < n ≤ 6, 0 < α < 1, 0 ≤ β < 1, 0 ≤ γ < 1, α + β + γ = 1, and β and γ are not 0 at the same time. The inventors have found that the replacement of Cl in an electrolyte LiₖPₘSₙCl with at least one of Br and I with lower electronegativity will result in lower reactivity and reduce charge dissipation to some extent, but the replacement of all Cl will result in lower ion conductivity of the electrolyte. Therefore, the solid electrolyte LiₖPₘSₙCl_{α}Br_{β}I_{γ} containing a series of different halogens Cl, Br and I not only can further reduce the reactivity between the solid-state sulfide electrolyte layer and the positive electrode material but also has no significant negative effect on the ion conductivity, which can ensure that the solid-state sulfide electrolyte layer has relatively high conductivity, good mechanical properties and excellent chemical and thermodynamic stability and thus can further improve the rate capability and cycle performance of the solid-state battery at room temperature and a high temperature.

In an embodiment, in the sulfide solid-state electrolyte LiₖPₘSₙCl_{α}Br_{β}I_{γ}, a coefficient ratio of α, β and γ may be (4-10):(0-5):(0-5). For example, the coefficient ratio of α, β and γ may be 5:2:3, 5:3:2, 6:1:3, 6:2:2, 6:3:1, 7:1:2, 7:2:1, 8:0.5:1.5, 8:1:1, 8:1.5:0.5, 9:0.5:0.5 or the like. The inventors have found that the replacement of all Cl with at least one of Br and I will result in lower ion conductivity of the sulfide solid-state electrolyte LiₖPₘSₙCl_{α}Br_{β}I_{γ}, thus reducing the migration speed of lithium ions. In the present disclosure, the coefficient ratio of α, β and γ is controlled to be (4-10):(0-5):(0-5) so that the ion conductivity can be prevented from being significantly reduced on the premise that the reactivity of LiₖPₘSₙCl_{α}Br_{β}I_{γ} is reduced.

In an embodiment, in LiₖPₘSₙCl_{α}Br_{β}I_{γ}, a total content of Br and I may be 15-25 mol% of a total content of halogen elements, for example, 15 mol%, 18 mol%, 20 mol%, 25 mol% or the like. Therefore, not only the reactivity of LiₖPₘSₙCl_{α}Br_{β}I_{γ} can be reduced but also the ion conductivity of LiₖPₘSₙCl_{α}Br_{β}I_{γ} is not affected.

In an embodiment, at least one of LiₖPₘSₙCl_{α}Br_{β}I_{γ}, Li₇P₃S₁₁, Li_{9.54}Si_{1.74}P_{1.44}S_{11.7}Cl_{0.3}, Li₁₀SnP₂S₁₂, Li₆PS₅Cl, Li₂S-P₂S₅, Li₃PS₄, 75Li₂S-25P₂S₅, 90Li₃PS₄-10ZnO, 9Li₂S-3P₂S₅-1Ni₃S₂, 60Li₂S-25P₂S₅-10Li₃N, 78Li₂S-22P₂S₅, 80(0.7Li₂S-0.3P₂S₅)-20LiI, 99(70Li₂S-30P₂S₅)-1Li₂ZrO₃, Li₇P_{2.9}S_{10.85}Mo_{0.01}, Li₇P_{2.9}S_{10.85}Mo_{0.01}, 70Li₂S-29P₂S₅-1Li₃PO₄, 70Li₂S-29P₂S₅-1P₂S₃, 90(0.7Li₂S-0.3P₂S₅)-10LiBr, 75Li₂S-23P₂S₅-2P₂Se₅, 95(0.8Li₂S-0.2P₂S₅)-5LiI, Li_{10.35}[Sn_{0.27}Si_{1.08}]P_{1.65}S₁₂, Li₁₀GeP₂S₁₂ and Li₁₁AlP₂S₁₂.

In an embodiment, the solid-state sulfide electrolyte may be LiₖPₘSₙCl_{α}Br_{β}I_{γ} and the solid-state sulfide electrolyte layer may be a layer of LiₖPₘSₙCl_{α}Br_{β}I_{γ}, thereby further improving the rate capability and cycle performance of the solid-state battery at room temperature and a high temperature.

In an embodiment, the solid-state sulfide electrolyte may be Li₆PS₅Cl_{α}Br_{β}I_{γ}, wherein 0 < α < 1, 0 ≤ β < 1, 0 ≤ γ < 1, α + β + γ = 1, β and γ are not 0 at the same time, and the coefficient ratio of α, β and γ may be (4-10):(0-5):(0-5). Therefore, the reactivity between the solid-state sulfide electrolyte layer and the positive electrode material can be further reduced, the ion conductivity of the solid-state sulfide electrolyte is prevented from a significant negative effect, and the solid-state sulfide electrolyte layer can be guaranteed to have relatively high conductivity, good mechanical properties, and excellent chemical and thermodynamic stability so that the rate capability and cycle performance of the solid-state battery at room temperature and a high temperature can be further improved.

### Negative electrode plate

A type of the negative electrode plate is not particularly limited in the present disclosure and may be selected by those skilled in the art according to actual requirements.

In an embodiment, the negative electrode plate may be at least one of a lithium plate, a lithium indium alloy, graphite, silicon, a silicon alloy and silicon dioxide. For example, the negative electrode plate may be a mixture of silicon dioxide and graphite or a mixture of silicon dioxide, graphite and silicon.

In an embodiment, in the solid-state battery, the solid-state sulfide electrolyte may be LiₖPₘSₙCl_{α}Br_{β}I_{γ}, the conductive agent may be a carbon material such as a carbon nanotube or superconducting carbon black, the positive electrode material may be a high-nickel positive electrode material, and the LATP coating layer may be a Li_{1.3}Al_{0.3}Ti_{1.7}(PO₄)₃ coating layer, where LiₖPₘSₙCl_{α}Br_{β}I_{γ} has relatively high conductivity, good mechanical properties and suitable reactivity, can well match the high-nickel positive electrode material, and does not react with the high-nickel positive electrode material. The solid-state battery with the preceding characteristics has the significantly improved electrochemical performance at room temperature and 70 °C: a relatively good rate capability and relatively good cycle performance.

In an embodiment, the present disclosure provides a method for preparing the preceding solid-state battery. The method includes the following steps: (1) a hydroxide precursor of a positive electrode material and a first lithium salt are mixed and subjected to first calcination so as to obtain the positive electrode material, wherein the first lithium salt remains on a surface of the positive electrode material; (2) the positive electrode material is mixed with a second lithium salt, Al₂O₃, TiO₂ and a phosphorus salt and subjected to second calcination so as to form an LATP coating layer on the surface of the positive electrode material and obtain a positive electrode composite material; (3) a solid-state sulfide electrolyte is provided; (4) the positive electrode composite material, the solid-state sulfide electrolyte and a conductive agent are mixed so as to prepare a positive electrode plate; (5) a solid-state sulfide electrolyte layer is prepared; and (6) the positive electrode plate, the solid-state sulfide electrolyte layer and a negative electrode plate are used for preparing the solid-state battery. Compared with that with no LATP coating layer formed on the surface of the positive electrode material, the solid-state battery prepared by the method has a higher charge/discharge capacity, a higher first effect, a higher capacity retention ratio, better cycle stability, a better rate capability and better cycle performance at normal temperature and a high temperature (70 °C).

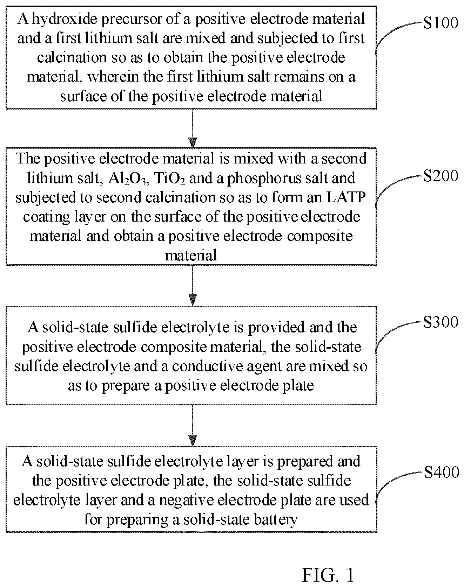

The method for preparing the solid-state battery in the preceding embodiment of the present disclosure is described below in detail with reference to FIG. 1.

S100: the hydroxide precursor of the positive electrode material and the first lithium salt are mixed and subjected to the first calcination so as to obtain the positive electrode material, wherein the first lithium salt remains on the surface of the positive electrode material.

Inventors have found that the lithium salt remaining on the surface in a synthesis process of the positive electrode material may be used as a directing agent (and also as a lithium source) for inducing the lithium source, an aluminum source, a titanium source and a phosphorus source to perform a chemical reaction on the surface of positive electrode material particles in a manner similar to "dendrite growth", so as to synthesize LATP (that is, lithium aluminum titanium phosphate) in situ, which is low in cost and easy to operate, makes the formed LATP uniformly dispersed on the surface of positive electrode material particles and can effectively control the thickness of the coating layer, achieving a nanoscale coating effect.

In an embodiment, a molar ratio of the first lithium salt to the precursor may be (1-1.2): 1. The inventors have found that a relatively high lithium content will result in the impurity of the lithium content in the positive electrode material, resulting in unnecessary side reactions in a charge/discharge process. In this embodiment, the molar ratio of the first lithium salt to the precursor is controlled to be (1-1.2):1, which can not only ensure that a small amount of lithium salt remains on the surface of the positive electrode material but also avoid excessive lithium-containing impurities in the positive electrode material.

In an embodiment, a molar ratio in percentage of the first lithium salt remaining on the surface of the positive electrode material to the positive electrode material may be 0.01-0.2%. Therefore, not only the lithium salt remaining on the surface of the positive electrode material can be used as the directing agent to generate the LATP coating layer in situ but also the purity of the positive electrode material can be ensured, thereby significantly reducing the possibility of side reactions in the charge/discharge process.

In an embodiment, the first calcination may be performed at 700-950 °C for 5-24 h, for example, may be performed at 750 °C for 10-12 h in an oxygen atmosphere. The inventors have found that a relatively long heating time and a relatively high temperature in the process will cause impurities or by-products to be produced. In this embodiment, the first calcination is controlled to be performed under the preceding conditions so that not only the hydroxide precursor of the positive electrode material can be sufficiently converted into the positive electrode material but also excessive impurities and by-products can be prevented from being formed, ensuring the purity of the positive electrode material and significantly reducing the possibility of side reactions in the charge/discharge process.

S200: the positive electrode material is mixed with the second lithium salt, Al₂O₃, TiO₂ and the phosphorus salt and subjected to the second calcination so as to form the LATP coating layer on the surface of the positive electrode material and obtain the positive electrode composite material.

Types of the lithium salt and the phosphorus salt are not particularly limited in the present disclosure and may be selected by those skilled in the art according to actual requirements.

In an embodiment, the phosphorus salt may be ammonium phosphate, and a mass ratio of Al₂O₃, TiO₂ and ammonium phosphate may be (0.02-0.04):(0.3-0.45):(1.13-1.17). Therefore, not only Al₂O₃, TiO₂ and the phosphorus salt can have a relatively high conversion rate but also an LATP coating material obtained through the reaction can have relatively high ion conductivity, extremely low porosity, excellent chemical and thermodynamic stability and three-dimensional skeleton dimensions suitable for the migration of lithium ions so that the material of the coating layer can better reduce the effect of a surface charge layer between the positive electrode plate and a solid-state electrolyte layer and the polarization of the battery and ensure that lithium ions can migrate rapidly, significantly improving the rate capability and cycle performance of the solid-state battery.

In an embodiment, the second calcination may be performed at 400-900 °C for 4-12 h in an O₂/N₂ atmosphere, where an oxygen content in the O₂/N₂ atmosphere may be 0.5-20v%. For example, the oxygen content may be 10v% or the like. The inventors have found that a relatively high oxygen content in the process will cause other compounds such as lithium titanate (LTO) to be produced in a crystal structure of the coating material, reducing the performance of the battery. In this embodiment, the preceding calcination conditions are controlled so that excessive impurity compounds can be effectively prevented from being generated in the coating layer on the positive electrode material, and the coating layer can better reduce the effect of the surface charge layer between the positive electrode plate and the solid-state electrolyte layer and the polarization of the battery and ensure that lithium ions can migrate rapidly, significantly improving the rate capability and cycle performance of the solid-state battery.

In an embodiment, the positive electrode composite material may have a particle size of not greater than 3 microns. Therefore, the positive electrode composite material, the solid-state sulfide electrolyte and the conductive agent can be further mixed sufficiently.

In an embodiment, the LATP coating layer may have a thickness of 1 nm to 5 µm, for example, 10 nm, 100 nm, 200 nm, 500nm, 1 µm, 2 µm, 5 µm or the like. The inventors have found that too small a thickness of the LATP coating layer results in a relatively poor coating effect of the positive electrode material and has an insignificant effect of reducing the reactivity between the solid-state sulfide electrolyte layer and the positive electrode material; and too large a thickness of the LATP coating layer will significantly reduce a transport speed of lithium ions, which affects the electrochemical performance of the solid-state battery. In this embodiment, lithium titanium phosphate (LTP) substituted with aluminum is used as the coating material on the surface of the positive electrode material and the thickness of the LATP coating layer is controlled to be 1 nm to 5 µm, which can effectively prevent a negative effect of too large a thickness of the coating layer on the transport of lithium ions, significantly reduce the effect of the surface charge layer, ensure the rapid migration of lithium ions, and reduce the polarization of the battery.

In an embodiment, the LATP coating layer may have a thickness of 30 nm to 80 nm, for example, 30 nm, 40 nm, 50 nm, 60 nm, 70 nm, 80 nm or the like. The inventors have also found that a nanoscale thickness of the LATP coating layer, especially about 50 nm, results in a lower effect of the surface charge layer and a higher migration speed of lithium ions, which can further improve the rate capability and cycle performance of the solid-state battery.

In an embodiment, a content of the LATP coating layer may be 0.01-15wt% of the positive electrode material, for example, 0.1wt%, 0.5wt%, 1wt%, 3wt%, 5wt%, 7wt%, 9wt%, 12wt%, 15wt% or the like. The inventors have found that the thickness of the LATP coating layer can be adjusted by controlling a mass ratio of the LATP coating layer to the positive electrode material. In this embodiment, the thickness of the LATP coating layer may be maintained within a range of 1 nm to 5 µm by controlling the content of the LATP coating layer to be the preceding content, which can significantly reduce the effect of the surface charge layer between the positive electrode plate and the solid-state electrolyte layer, ensure the rapid migration of lithium ions, and reduce the polarization of the battery. According to a specific embodiment of the present disclosure, under the same conditions, compared with NCM811 with no coating, an all-solid-state battery where the content of the LATP coating layer is about 1wt% of the positive electrode material NCM811 has significantly improved electrochemical performance at room temperature and a high temperature (70 °C).

In an embodiment, the LATP coating layer may include at least one selected from Li_{1.3}Al_{0.3}Ti_{1.7}(PO₄)₃, Li₃PO₄, LH₂PO₄, LiTi₂(PO₄)₃ and LiPO₃.

In an embodiment, LATP may be Li_{1.3}Al_{0.3}Ti_{1.7}(PO₄)₃. Li_{1.3}Al_{0.3}Ti_{1.7}(PO₄)₃ has extremely high ion conductivity, extremely low porosity, excellent chemical and thermodynamic stability and three-dimensional skeleton dimensions that are most suitable for the migration of lithium ions. Therefore, the use of Li_{1.3}Al_{0.3}Ti_{1.7}(PO₄)₃ as the material of the coating layer can further reduce the effect of the surface charge layer between the positive electrode plate and the solid-state electrolyte layer and the polarization of the battery and ensure the rapid migration of lithium ions, which can further improve the rate capability and cycle performance of the solid-state battery.

In an embodiment, the positive electrode material may include AₐM_{b}O_{y}, wherein 0 < a ≤ 6, 0 < b ≤ 4, 2 ≤ y ≤ 5, A is an alkali metal element including lithium, and M is at least one selected from a transition metal, magnesium, calcium, boron, barium, aluminum and a boron element.

In an embodiment, the transition metal is at least one selected from titanium, vanadium, chromium, molybdenum, tungsten, manganese, iron, cobalt, nickel, palladium, platinum, copper, silver, gold, zinc, cadmium and copper.

In an embodiment, the positive electrode material may include at least one selected from LiₓMn₂O₄, LiₓMnO₂, LiₓCoO₂, LiₓV₃O₈, LiₓNiO₂, LiₓNi_{y}CO_{z}O₂, LiₓNi_{y}Mn_{z}O₂ and LiₓCo_{y}Mn_{z}O₂, wherein 0.1 < x ≤ 2, 0 < y ≤ 2, 0 < z ≤ 2, and 0.5 < y+z ≤ 2. Therefore, the rate capability and cycle performance of the solid-state battery can be further improved.

In an embodiment, the positive electrode material may include at least one selected from LiₓMn₂O₄, LiₓMnO₂, LiₓCoO₂, LiₓV₃O₈, LiₓNiO₂, LiₓNi_{y}Co_{z}O₂, LiₓNi_{y}Mn_{z}O₂ and LiₓCo_{y}Mn_{z}O₂, V₂O₅, V₅S₈, TiS₂, V₂S₅, NbSe₃ and MoS₂, wherein 0.1 < x ≤ 2, 0 < y ≤ 2, 0 < z ≤ 2, and 0.5 < y+z ≤ 2.

In an embodiment, the positive electrode material is a high-nickel nickel-cobalt-manganese ternary positive electrode material such as NCM811. The high-nickel nickel-cobalt-manganese ternary positive electrode material has the advantages of a high specific capacity, a low cost, good safety and the like and can further improve the overall performance of the solid-state battery.

S300: the solid-state sulfide electrolyte is provided and the positive electrode composite material, the solid-state sulfide electrolyte and the conductive agent are mixed so as to prepare the positive electrode plate.

In an embodiment, the solid-state sulfide electrolyte may be at least one of a solid-state sulfide electrolyte containing a halogen element and a solid-state sulfide electrolyte containing no halogen element.

In an embodiment, the solid-state sulfide electrolyte containing the halogen element may include LiₖPₘSₙCl_{α}Br_{β}I_{γ}, wherein 5 < k ≤ 6, 0.5 < m ≤ 1.5, 4 < n ≤ 6, 0 < α < 1, 0 ≤ β < 1, 0 ≤ γ < 1, α + β + γ = 1, and β and γ are not 0 at the same time. The inventors have found that the replacement of Cl in an electrolyte LiₖPₘSₙCl with at least one of Br and I with lower electronegativity will result in lower reactivity and reduce charge dissipation to some extent, but the replacement of all Cl will result in lower ion conductivity of the electrolyte. Therefore, the solid electrolyte LiₖPₘSₙCl_{α}Br_{β}I_{γ} containing a series of different halogens Cl, Br and I not only can further reduce the reactivity between the solid-state sulfide electrolyte layer and the positive electrode material but also has no significant negative effect on the ion conductivity, which can ensure that the solid-state sulfide electrolyte layer has relatively high conductivity, good mechanical properties and excellent chemical and thermodynamic stability and thus can further improve the rate capability and cycle performance of the solid-state battery at room temperature and a high temperature.

In an embodiment, in the sulfide solid-state electrolyte LiₖPₘSₙCl_{α}Br_{β}I_{γ}, a coefficient ratio of α, β and γ may be (4-10):(0-5):(0-5). For example, the coefficient ratio of α, β and γ may be 5:2:3, 5:3:2, 6:1:3, 6:2:2, 6:3:1, 7:1:2, 7:2:1, 8:0.5:1.5, 8:1:1, 8:1.5:0.5, 9:0.5:0.5 or the like. The inventors have found that the replacement of all Cl with at least one of Br and I will result in lower ion conductivity of the sulfide solid-state electrolyte LiₖPₘSₙCl_{α}Br_{β}I_{γ}, thus reducing the migration speed of lithium ions. In the present disclosure, the coefficient ratio of α, β and γ is controlled to be (4-10):(0-5):(0-5) so that the ion conductivity can be prevented from being significantly reduced on the premise that the reactivity of LiₖPₘSₙCl_{α}Br_{β}I_{γ} is reduced.

In an embodiment, in LiₖPₘSₙCl_{α}Br_{β}I_{γ}, a total content of Br and I may be 15-25 mol% of a total content of halogen elements, for example, 15 mol%, 18 mol%, 20 mol%, 25 mol% or the like. Therefore, not only the reactivity of LiₖPₘSₙCl_{α}Br_{β}I_{γ} can be reduced but also the ion conductivity of LiₖPₘSₙCl_{α}Br_{β}I_{γ} is not affected.

In an embodiment, at least one of LiₖPₘSₙCl_{α}Br_{β}I_{γ}, Li₇P₃S₁₁, Li_{9.54}Si_{1.74}P_{1.44}S_{11.7}Cl_{0.3}, Li₁₀SnP₂S₁₂, Li₆PS₅Cl, Li₂S-P₂S₅, Li₃PS₄, 75Li₂S-25P₂S₅, 90Li₃PS₄-10ZnO, 9Li₂S-3P₂S₅-1Ni₃S₂, 60Li₂S-25P₂S₅-10Li₃N, 78Li₂S-22P₂S₅, 80(0.7Li₂S-0.3P₂S₅)-20LiI, 99(70Li₂S-30P₂S₅)-1Li₂ZrO₃, Li₇P_{2.9}S_{10.85}Mo_{0.01}, Li₇P_{2.9}S_{10.85}Mo_{0.01}, 70Li₂S-29P₂S₅-1Li₃PO₄, 70Li₂S-29P₂S₅-1P₂S₃, 90(0.7Li₂S-0.3P₂S₅)-10LiBr, 75Li₂S-23P₂S₅-2P₂Se₅, 95(0.8Li₂S-0.2P₂S₅)-5LiI, Li_{10.35}[Sn_{0.27}Si_{1.08}]P_{1.65}S₁₂, Li₁₀GeP₂S₁₂ and Li₁₁AlP₂S₁₂.

In an embodiment, the solid-state sulfide electrolyte may be LiₖPₘSₙCl_{α}Br_{β}I_{γ} and the solid-state sulfide electrolyte layer may be a layer of LiₖPₘSₙCl_{α}Br_{β}I_{γ}, thereby further improving the rate capability and cycle performance of the solid-state battery at room temperature and a high temperature.

In an embodiment, the solid-state sulfide electrolyte may be Li₆PS₅Cl_{α}Br_{β}I_{γ}, wherein 0 < α < 1, 0 ≤ β < 1, 0 ≤ γ < 1, α + β + γ = 1, β and γ are not 0 at the same time, and the coefficient ratio of α, β and γ may be (4-10):(0-5):(0-5). Therefore, the reactivity between the solid-state sulfide electrolyte layer and the positive electrode material can be further reduced, the ion conductivity of the solid-state sulfide electrolyte is prevented from a significant negative effect, and the solid-state sulfide electrolyte layer can be guaranteed to have relatively high conductivity, good mechanical properties, and excellent chemical and thermodynamic stability so that the rate capability and cycle performance of the solid-state battery at room temperature and a high temperature can be further improved.

In an embodiment, the solid-state sulfide electrolyte may be LiₖPₘSₙCl_{α}Br_{β}I_{γ}, for example, Li₆PS₅Cl_{α}Br_{β}I_{γ} or the like.

In an embodiment, the solid-state sulfide electrolyte LiₖPₘSₙCl_{α}Br_{β}I_{γ} may be obtained in the following manner: a lithium salt, a phosphorus salt, a sulfur salt and a salt having a halogen element are mixed and subjected to third calcination in an inert atmosphere so as to obtain the solid-state sulfide electrolyte LiₖPₘSₙCl_{α}Br_{β}I_{γ}. Wherein, the third calcination may be performed at 200-800 °C for 2-4 h at a temperature ramp rate of 0.2-5 °C/min. Therefore, not only the solid-state sulfide electrolyte LiₖPₘSₙCl_{α}Br_{β}I_{γ} can be effectively prepared but also excessive impurity phases can be prevented from being generated.

In an embodiment, Li₂S, P₂S₅ and LiX may be mixed and subjected to the third calcination in the inert atmosphere, wherein, X may be at least one of Cl, Br and I, a molar ratio of Li₂S, P₂S₅ and LiX may be 5:1:1, and a molar ratio of Cl, Br and I may be (4-10):(0-5):(0-5). Therefore, the reactivity between the prepared solid-state sulfide electrolyte and the positive electrode material can be further reduced, the ion conductivity of the solid-state sulfide electrolyte is prevented from a significant negative effect, and the solid-state sulfide electrolyte layer can be guaranteed to have relatively high conductivity, good mechanical properties, and excellent chemical and thermodynamic stability so that the rate capability and cycle performance of the solid-state battery at room temperature and a high temperature can be further improved.

In an embodiment, a mass ratio of the solid-state sulfide electrolyte to the positive electrode composite material is 1:(7-10), preferably, 1:(8-9). Therefore, not only the reactivity between the solid-state sulfide electrolyte layer and the positive electrode material can be further reduced but also the impedance of an interface between the positive electrode plate and the solid-state electrolyte layer can be significantly reduced, thereby further improving the rate capability and cycle performance of the solid-state battery at room temperature and a high temperature.

S400: the solid-state sulfide electrolyte layer is prepared and the positive electrode plate, the solid-state sulfide electrolyte layer and the negative electrode plate are used for preparing the solid-state battery.

In an embodiment, the positive electrode composite material, LiₖPₘSₙCl_{α}Br_{β}I_{γ} and the conductive agent may be mixed so as to prepare the positive electrode plate, the solid-state sulfide electrolyte layer may be prepared using LiₖPₘSₙCl_{α}Br_{β}I_{γ}, and the positive electrode plate, the solid-state sulfide electrolyte layer and the negative electrode plate may be used for preparing the solid-state battery. Therefore, the rate capability and cycle performance of the solid-state battery at room temperature and a high temperature can be further improved.

A type of the negative electrode plate is not particularly limited in the present disclosure and may be selected by those skilled in the art according to actual requirements.

In an embodiment, the negative electrode plate may be at least one of a lithium plate, a lithium indium alloy, graphite, silicon, a silicon alloy and silicon dioxide. For example, the negative electrode plate may be a single substance or a mixture of multiple substances. For example, the negative electrode plate may be a mixture of silicon dioxide and graphite or a mixture of silicon dioxide, graphite and silicon.

In an embodiment, in the solid-state battery, the solid-state sulfide electrolyte may be LiₖPₘSₙCl_{α}Br_{β}I_{γ}, the conductive agent may be a carbon material such as a carbon nanotube or superconducting carbon black, the positive electrode material may be a high-nickel positive electrode material, and the LATP coating layer may be a Li_{1.3}Al_{0.3}Ti_{1.7}(PO₄)₃ coating layer, where LiₖPₘSₙCl_{α}Br_{β}I_{γ} has relatively high conductivity, good mechanical properties and suitable reactivity, can well match the high-nickel positive electrode material, and does not react with the high-nickel positive electrode material. The solid-state battery with the preceding characteristics has the significantly improved electrochemical performance at room temperature and 70 °C: a relatively good rate capability and relatively good cycle performance.

In addition, it is to be noted that types of the first lithium salt and the second lithium salt are not particularly limited in the present disclosure and may be selected by those skilled in the art according to actual requirements.

In an embodiment, the present disclosure provides a vehicle having the preceding solid-state battery or a solid-state battery prepared by the preceding method. The vehicle of the present disclosure has higher safety and a longer battery life.

Typical but non-limiting examples of the present disclosure are described below.

### Example 1

(1) A Ni_{0.83}Co_{0.08}Mn_{0.09}(OH)₂ precursor was synthesized by a hydroxide co-precipitation method, lithium hydroxide was mixed with the precursor at a molar ratio of 1.05:1, and then the mixture was calcined at 750 °C for 10 hours, so as to obtain a positive electrode material named NCM-811. The powder material after calcination was ground by a mortar or an ultra centrifugal grinding mill to a particle size of less than 3 µm, and then the sample was tested for the content of residual alkalis. The test result showed that the content of the residual lithium salt was 0.07 mol%, which was used as a directing agent for generating an LATP coating layer in situ subsequently.
(2) 100 g of the positive electrode material obtained in step (1) was weighed, Li₂CO₃ (0.18 g) was weighted as a second lithium salt, and Al₂O₃ (0.02 g), TiO₂ (0.35 g) and (NH₄)₃PO₄ (1.15 g) were weighted, wherein Li₂CO₃, Al₂O₃, TiO₂ and (NH₄)₃PO₄ had been ground into nano particles (< 50 nm) by a nanogrinder. Li₂CO₃, Al₂O₃, TiO₂ and (NH₄)₃PO₄ were thoroughly ground and mixed by a mortar and then thoroughly mixed with the positive electrode material in a high-speed mixer until they were mixed uniformly. The mixed materials were calcined for 8 h in a calciner of 700 °C and in an O₂/N₂ atmosphere with an oxygen content of 1v% and then ground and sieved, so as to obtain a positive electrode composite material with NCM-811 coated with LATP.
(3) Li₆PS₅Cl_{0.8}Br_{0.1}I_{0.1} with different proportions of halogen elements was prepared: Li₂S, P₂S₅ and LiX (X = Cl, Br, I) were weighed in an argon-filled glovebox, where a molar ratio of Li₂S:LiX:P₂S₅ was 5:2:1 and a molar ratio of LiCl:LiBr:LiI was 8:1:1; these raw materials were put in a planetary ball mill whose rotational speed was set to 200 revolutions per hour; and the mixed raw materials were poured into a quartz vessel and calcined for 12 h in a calciner of 700 °C and at a temperature ramp rate of 3 °C/min. After calcination, these raw materials were cooled at a rate of 8 °C/min or naturally cooled.
(4) Powder of the positive electrode composite material with NCM-811 coated with LATP, a solid electrolyte Li₆PS₅Cl_{0.8}Br_{0.1}I_{0.1} and a carbon material (vapor grown carbon fiber (VGCF)) were mixed at a weight ratio of 70:25:5 so as to prepare a positive electrode plate: 7 mg of LATP-coated positive electrode material was doped with an agate mortar containing 2.5 mg of Li₆PS₅Cl_{0.8}Br_{0.1}I_{0.1} and 0.5 mg of VGCFs (the carbon material). Positive electrode composite powder was then transferred into a mold cell with a diameter of 10 mm. Subsequently, the composite material was pressed into a sheet shape by applying a pressure of 70 bar at room temperature to obtain the positive electrode plate.
(5) After the positive electrode plate was prepared, 100 mg of Li₆PS₅Cl_{0.8}Br_{0.1}I_{0.1} was added to the mold cell and pressed again at a pressure of 7 bar, so as to form a solid-state electrolyte layer.
(6) After the pressure was released, a lithium indium alloy, a negative electrode, was placed on the top of the electrolyte to complete a structure of a battery. Finally, all components were pressed at a pressure of 70 bar into a whole to form a solid-state battery that can work normally.

### Example 2

(1) A Ni_{0.83}Co_{0.08}Mn_{0.09}(OH)₂ precursor was synthesized by a hydroxide co-precipitation method, lithium hydroxide was mixed with the precursor at a molar ratio of 1.05:1, and then the mixture was calcined at 750 °C for 10 hours, so as to obtain a positive electrode material named NCM-811. The powder material after calcination was ground by a mortar or an ultra centrifugal grinding mill to a particle size of less than 3 µm, and then the sample was tested for the content of residual alkalis. The test result showed that the content of the residual lithium salt was 0.07 mol%, which was used as a directing agent for generating an LATP coating layer in situ subsequently.
(2) 100 g of the positive electrode material obtained in step (1) was weighed, Li₂CO₃ (0.18 g) was weighted as a second lithium salt, and Al₂O₃ (0.02 g), TiO₂ (0.35 g) and (NH₄)₃PO₄ (1.15 g) were weighted, wherein Li₂CO₃, Al₂O₃, TiO₂ and (NH₄)₃PO₄ had been ground into nano particles (< 50 nm) by a nanogrinder. Li₂CO₃, Al₂O₃, TiO₂ and (NH₄)₃PO₄ were thoroughly ground and mixed by a mortar and then thoroughly mixed with the positive electrode material in a high-speed mixer until they were mixed uniformly. The mixed materials were calcined for 8 h in a calciner of 700 °C and in an O₂/N₂ atmosphere with an oxygen content of 1v% and then ground and sieved, so as to obtain a positive electrode composite material with NCM-811 coated with LATP.
(3) Li₆PS₅Cl with different proportions of halogen elements was prepared: Li₂S, P₂S₅ and LiCl were weighed in an argon-filled glovebox, where a molar ratio of Li₂S:LiCl:P₂S₅ was 5:2:1; these raw materials were put in a planetary ball mill whose rotational speed was set to 200 revolutions per hour; and the mixed raw materials were poured into a quartz vessel and calcined for 12 h in a calciner of 700 °C and at a temperature ramp rate of 3 °C/min. After calcination, these raw materials were cooled at a rate of 8 °C/min or naturally cooled.
(4) Powder of the positive electrode composite material with NCM-811 coated with LATP, a solid electrolyte Li₆PS₅Cl and a carbon material (VGCF) were mixed at a weight ratio of 70:25:5 so as to prepare a positive electrode plate: 7 mg of LATP-coated positive electrode material was doped with an agate mortar containing 2.5 mg of Li₆PS₅Cl and 0.5 mg of VGCFs (the carbon material). Positive electrode composite powder was then transferred into a mold cell with a diameter of 10 mm. Subsequently, the composite material was pressed into a sheet shape by applying a pressure of 70 bar at room temperature to obtain the positive electrode plate.
(5) After the positive electrode plate was prepared, 100 mg of Li₆PS₅Cl was added to the mold cell and pressed again at a pressure of 7 bar, so as to form a solid-state electrolyte layer.
(6) After the pressure was released, a lithium indium alloy, a negative electrode, was placed on the top of the electrolyte to complete a structure of a battery. Finally, all components were pressed at a pressure of 70 bar into a whole to form a solid-state battery that can work normally.

### Example 3

(1) A Ni_{0.83}Co_{0.08}Mn_{0.09}(OH)₂ precursor was synthesized by a hydroxide co-precipitation method, lithium hydroxide was mixed with the precursor at a molar ratio of 1.12:1, and then the mixture was calcined at 875 °C for 8 hours, so as to obtain a positive electrode material named NCM-811. The powder material after calcination was ground by a mortar or an ultra centrifugal grinding mill to a particle size of less than 3 µm, and then the sample was tested for the content of residual alkalis. The test result showed that the content of the residual lithium salt was 0.07 mol%, which was used as a directing agent for generating an LATP coating layer in situ subsequently.
(2) 100 g of the positive electrode material obtained in step (1) was weighed, Li₂CO₃ (0.18 g) was weighted as a second lithium salt, and Al₂O₃ (0.02 g), TiO₂ (0.35 g) and (NH₄)₃PO₄ (1.15 g) were weighted, wherein Li₂CO₃, Al₂O₃, TiO₂ and (NH₄)₃PO₄ had been ground into nano particles (< 50 nm) by a nanogrinder. Li₂CO₃, Al₂O₃, TiO₂ and (NH₄)₃PO₄ were thoroughly ground and mixed by a mortar and then thoroughly mixed with the positive electrode material in a high-speed mixer until they were mixed uniformly. The mixed materials were calcined for 6 h in a calciner of 680 °C and in an O₂/N₂ atmosphere with an oxygen content of 5v% and then ground and sieved, so as to obtain a positive electrode composite material with NCM-811 coated with LATP.
(3) Li₆PS₅Cl with different proportions of halogen elements was prepared: Li₂S, P₂S₅ and LiX (X = Cl, Br) were weighed in an argon-filled glovebox, where a molar ratio of Li₂S:LiX:P₂S₅ was 5:1:1 and a molar ratio of Cl to Br was 5:2; these raw materials were put in a planetary ball mill whose rotational speed was set to 200 revolutions per hour; and the mixed raw materials were poured into a quartz vessel and calcined for 4 h in a calciner of 600 °C and at a temperature ramp rate of 2 °C/min. After calcination, these raw materials were cooled at a rate of 5 °C/min or naturally cooled.
(4) Powder of the positive electrode composite material with NCM-811 coated with LATP, a solid electrolyte Li₆PS₅Cl and a carbon material (VGCF) were mixed at a weight ratio of 90:10:5 so as to prepare a positive electrode plate: 7 mg of LATP-coated positive electrode material was doped with an agate mortar containing 2.5 mg of Li₆PS₅Cl and 0.5 mg of VGCFs (the carbon material). Positive electrode composite powder was then transferred into a mold cell with a diameter of 10 mm. Subsequently, the composite material was pressed into a sheet shape by applying a pressure of 70 bar at room temperature to obtain the positive electrode plate.
(5) After the positive electrode plate was prepared, 100 mg of Li₆PS₅Cl was added to the mold cell and pressed again at a pressure of 7 bar, so as to form a solid-state electrolyte layer.
(6) After the pressure was released, a lithium indium alloy, a negative electrode, was placed on the top of the electrolyte to complete a structure of a battery. Finally, all components were pressed at a pressure of 70 bar into a whole to form a solid-state battery that can work normally.

### Example 4

(1) A Ni_{0.83}Co_{0.08}Mn_{0.09}(OH)₂ precursor was synthesized by a hydroxide co-precipitation method, lithium hydroxide was mixed with the precursor at a molar ratio of 1.05:1, and then the mixture was calcined at 750 °C for 10 hours, so as to obtain a positive electrode material named NCM-811. The powder material after calcination was ground by a mortar or an ultra centrifugal grinding mill to a particle size of less than 3 µm, and then the sample was tested for the content of residual alkalis. The test result showed that the content of the residual lithium salt was 0.07 mol%, which was used as a directing agent for generating an LATP coating layer in situ subsequently.
(2) 100 g of the positive electrode material obtained in step (1) was weighed, Li₂CO₃ (0.18 g) was weighted as a second lithium salt, and Al₂O₃ (0.02 g), TiO₂ (0.35 g) and (NH₄)₃PO₄ (1.15 g) were weighted, wherein Li₂CO₃, Al₂O₃, TiO₂ and (NH₄)₃PO₄ had been ground into nano particles (< 50 nm) by a nanogrinder. Li₂CO₃, Al₂O₃, TiO₂ and (NH₄)₃PO₄ were thoroughly ground and mixed by a mortar and then thoroughly mixed with the positive electrode material in a high-speed mixer until they were mixed uniformly. The mixed materials were calcined for 8 h in a calciner of 700 °C and in an O₂/N₂ atmosphere with an oxygen content of 1v% and then ground and sieved, so as to obtain a positive electrode composite material with NCM-811 coated with LATP.
(3) Li₆PS₅Cl with different proportions of halogen elements was prepared: Li₂S, P₂S₅ and LiX (X = Cl, I) were weighed in an argon-filled glovebox, where a molar ratio of Li₂S:LiX:P₂S₅ was 5:1:1 and a molar ratio of Cl to I was 10:3; these raw materials were put in a planetary ball mill whose rotational speed was set to 200 revolutions per hour; and the mixed raw materials were poured into a quartz vessel and calcined for 12 h in a calciner of 700 °C and at a temperature ramp rate of 3 °C/min. After calcination, these raw materials were cooled at a rate of 8 °C/min or naturally cooled.
(4) Powder of the positive electrode composite material with NCM-811 coated with LATP, a solid electrolyte Li₆PS₅Cl and a carbon material (VGCF) were mixed at a weight ratio of 70:25:5 so as to prepare a positive electrode plate: 7 mg of LATP-coated positive electrode material was doped with an agate mortar containing 2.5 mg of Li₆PS₅Cl and 0.5 mg of VGCFs (the carbon material). Positive electrode composite powder was then transferred into a mold cell with a diameter of 10 mm. Subsequently, the composite material was pressed into a sheet shape by applying a pressure of 70 bar at room temperature to obtain the positive electrode plate.
(5) After the positive electrode plate was prepared, 100 mg of Li₆PS₅Cl was added to the mold cell and pressed again at a pressure of 7 bar, so as to form a solid-state electrolyte layer.
(6) After the pressure was released, a lithium indium alloy, a negative electrode, was placed on the top of the electrolyte to complete a structure of a battery. Finally, all components were pressed at a pressure of 70 bar into a whole to form a solid-state battery that can work normally.

### Comparative example 1

(1) A Ni_{0.83}Co_{0.08}Mn_{0.09}(OH)₂ precursor was synthesized by a hydroxide co-precipitation method, lithium hydroxide was mixed with the precursor at a molar ratio of 1.05:1, and then the mixture was calcined at 750 °C for 10 hours, so as to obtain a positive electrode material named NCM-811. The powder material after calcination was ground by a mortar or an ultra centrifugal grinding mill to a particle size of less than 3 µm.
(2) Li₆PS₅Cl with different proportions of halogen elements was prepared: Li₂S, P₂S₅ and LiCl were weighed in an argon-filled glovebox, where a molar ratio of Li₂S:LiCl:P₂S₅ was 5:2:1; these raw materials were put in a planetary ball mill whose rotational speed was set to 200 revolutions per hour; and the mixed raw materials were poured into a quartz vessel and calcined for 12 h in a calciner of 700 °C and at a temperature ramp rate of 3 °C/min. After calcination, these raw materials were cooled at a rate of 8 °C/min or naturally cooled.
(3) Powder of the positive electrode material NCM-811, a solid electrolyte Li₆PS₅Cl and a carbon material (VGCF) were mixed at a weight ratio of 70:25:5 so as to prepare a positive electrode plate: 7 mg of positive electrode material was doped with an agate mortar containing 2.5 mg of Li₆PS₅Cl and 0.5 mg of VGCFs (the carbon material). Positive electrode composite powder was then transferred into a mold cell with a diameter of 10 mm. Subsequently, the composite material was pressed into a sheet shape by applying a pressure of 70 bar at room temperature to obtain the positive electrode plate.
(4) After the positive electrode plate was prepared, 100 mg of Li₆PS₅Cl was added to the mold cell and pressed again at a pressure of 7 bar, so as to form a solid-state electrolyte layer.
(5) After the pressure was released, a lithium indium alloy, a negative electrode, was placed on the top of the electrolyte to complete a structure of a battery. Finally, all components were pressed at a pressure of 70 bar into a whole to form a solid-state battery that can work normally.

### Evaluation of the solid-state batteries prepared in examples and Comparative Example 1

### 1. Analysis of morphology and elemental characteristics

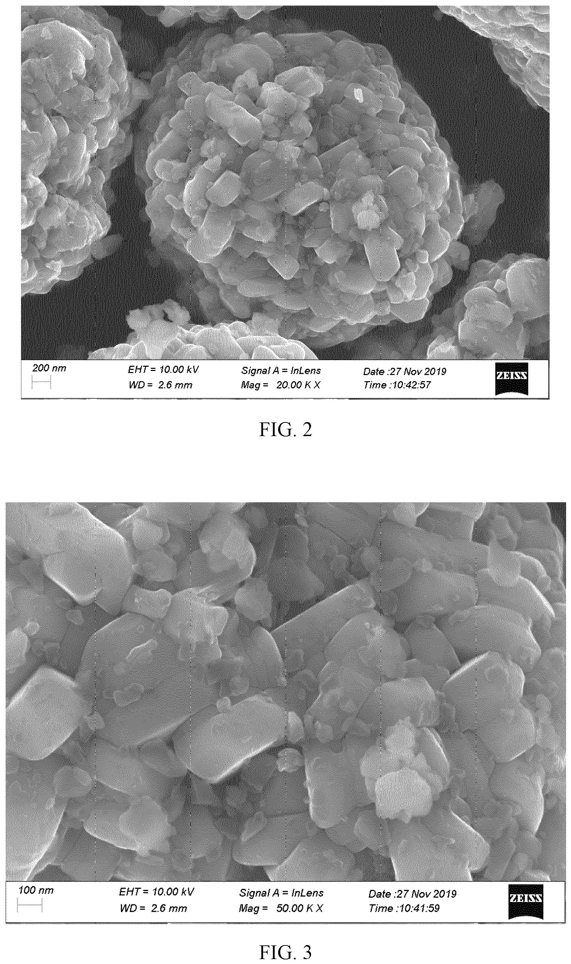

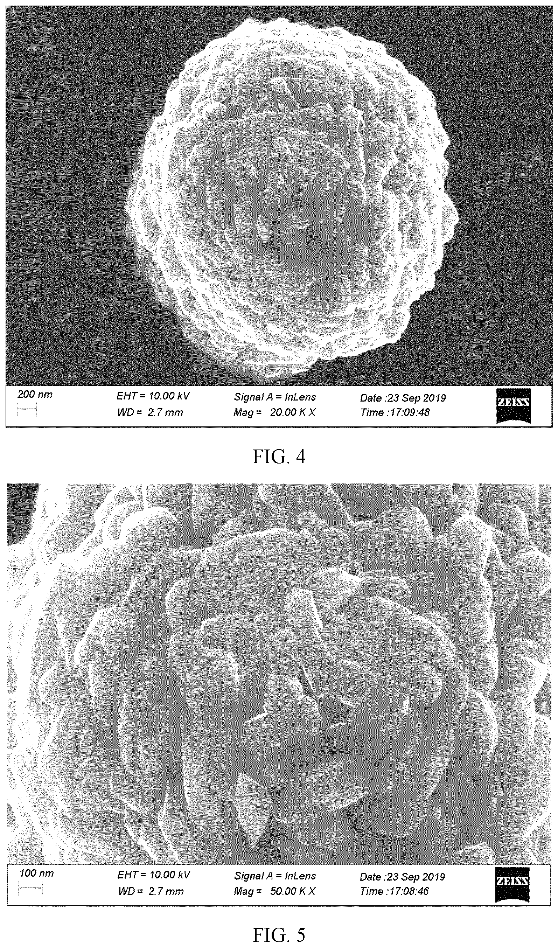

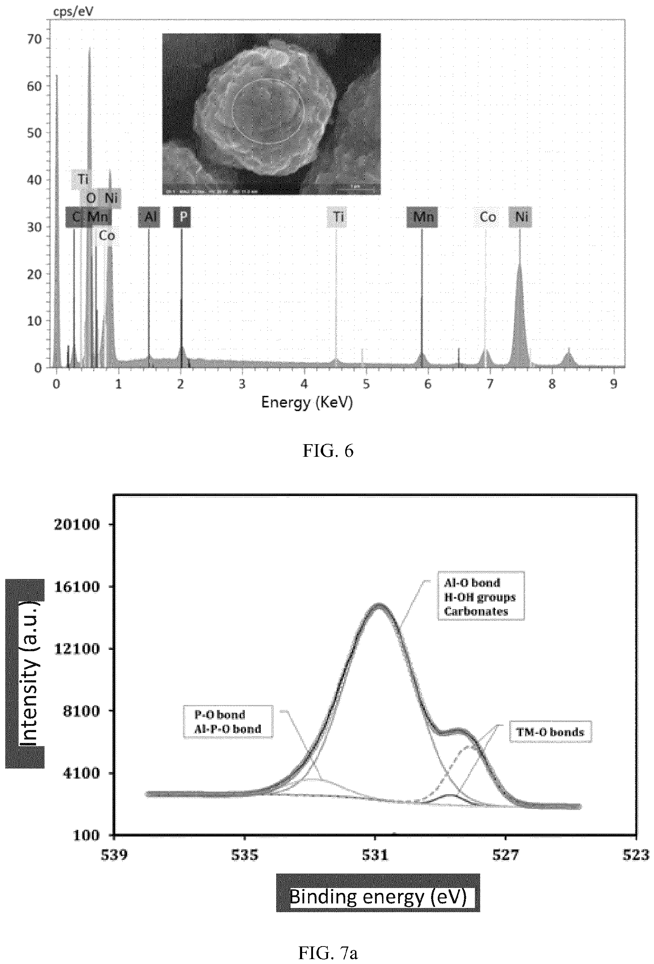

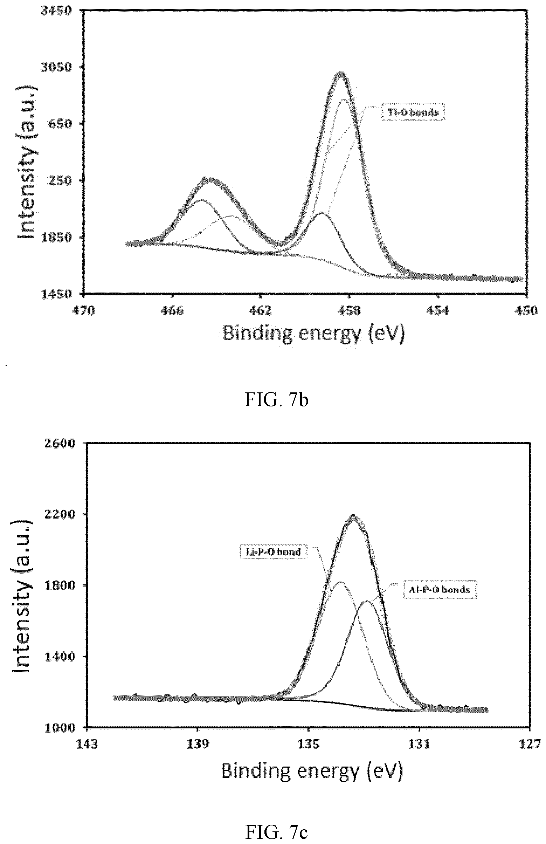

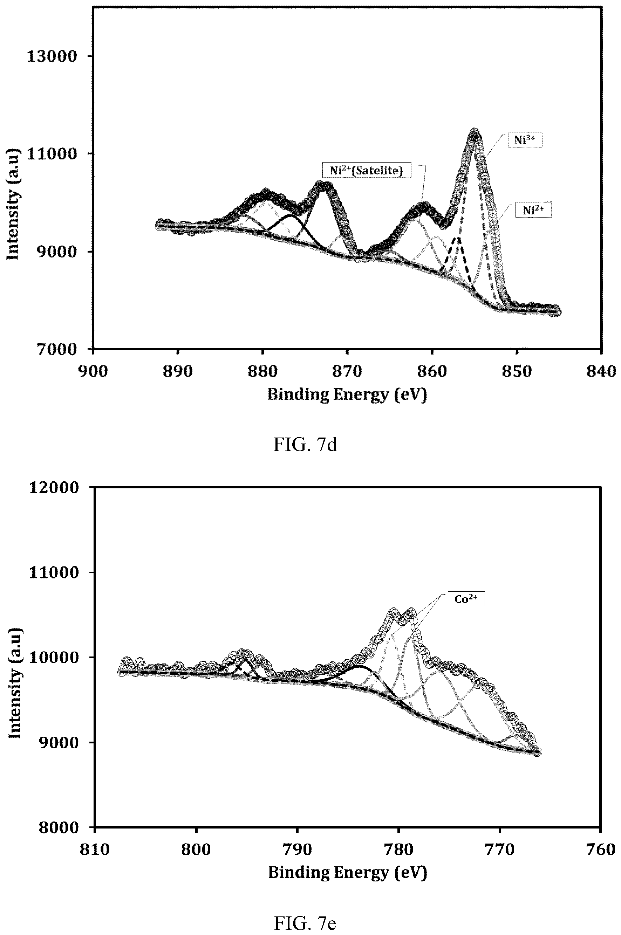

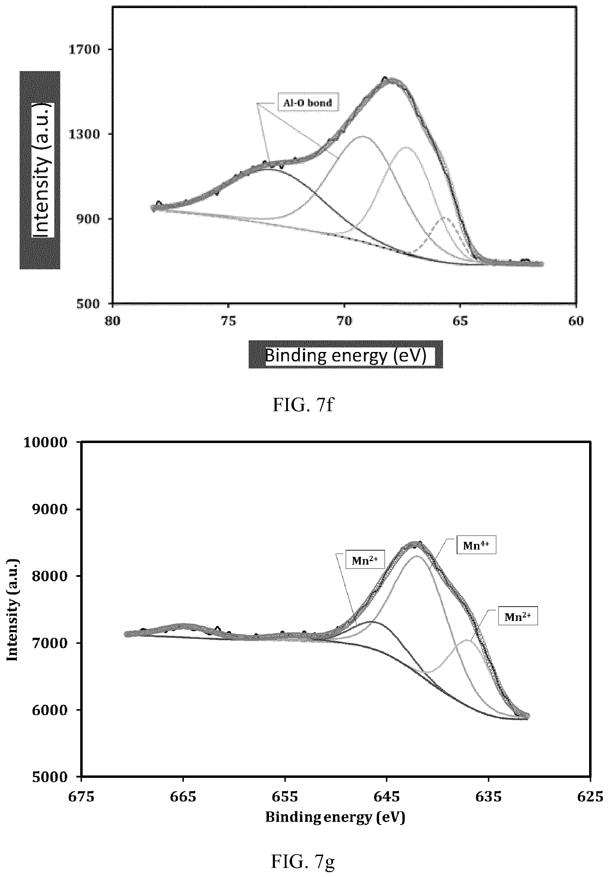

(1) The positive electrode composite materials (LATP-coated NCM-811) prepared in examples and the positive electrode material NCM-811 prepared in Comparative Example 1 were subjected to SEM tests separately. The test results are shown in FIGS. 2 to 5. FIGS. 2 and 3 are SEM images of a positive electrode composite material prepared in an example of the present disclosure, and FIGS. 4 and 5 are SEM images of the positive electrode material prepared in Comparative Example 1.
   It can be found through the comparison of FIGS. 2 and 3 with FIGS. 4 and 5 that there is a layer of particles uniformly coated on the surface of NCM-811 in FIGS. 2 and 3, which indicates that a uniform coating layer is successfully formed on the positive electrode material NCM-811 by an in-situ synthesis method in the embodiments.
(2) The positive electrode composite material (LATP-coated NCM-811) prepared in an example of the present disclosure was subjected to an EDS scanning test. FIG. 6 shows an EDS spectrum of a positive electrode composite material prepared in an example of the present disclosure.
   As can be seen from FIG. 6, an LATP coating material is formed on the surface of the positive electrode material NCM-811.
(3) The positive electrode composite material (LATP-coated NCM-811) prepared in an example of the present disclosure was subjected to an XPS test. FIGS. 7A, 7B, 7C, 7D, 7E, 7F and 7G are XPS diagrams of a positive electrode composite material prepared in an example of the present disclosure. TM-O in FIG. 7A represents a chemical key formed between nickel-cobalt-manganese and oxygen in the positive electrode composite material; FIG. 7B shows the binding energy of Ti at different valence states to oxygen; FIG. 7C shows signals for detecting P-O keys, which include Li-P-O and Al-P-O key signals; FIG. 7F shows signals for detecting Al-O keys; in FIG. 7D, a detected Ni2p signal exists in a particular region of 894-845 eV, where Ni^{δ+} in different coordination environments, such as divalent, trivalent and tetravalent Ni, is contained; similarly, FIG. 7E indicates the state of Co in different coordination environments, and FIG. 7G indicates the state of Mn in different coordination environments.
   It is confirmed according to the XPS spectrums in FIG. 7 that aluminum, titanium and phosphorus elements are present on the surface of the positive electrode material NCM-811. The XPS spectrums in the region of the binding energy to oxygen show the presence of 2-3 oxygen element species in the material, which in turn proves the presence of the coating material on the surface of NCM-811.

### 2. Electrochemical evaluation

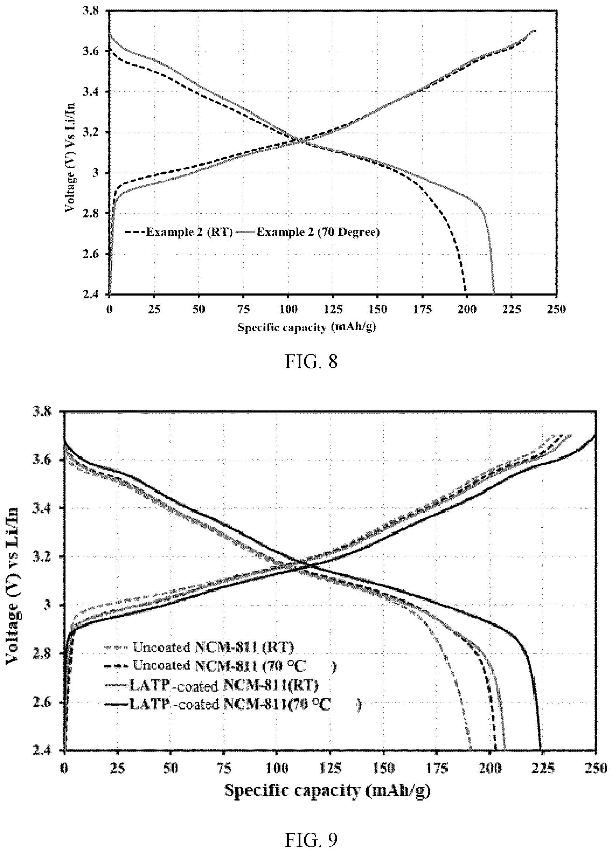

The charge/discharge capacity, rate capability and cycle performance of the solid-state batteries prepared in Example 1, Example 2 and Comparative Example 1 were tested, separately.
(1) The initial performance of the solid-state battery was evaluated at a charge-discharge rate of 0.1C at room temperature (RT) and 70 °C, separately. The test results are shown in FIGS. 8 and 9 and Table 1. FIG. 8 is a diagram illustrating tested initial performance of the solid-state battery prepared in Example 2. FIG. 9 is a diagram illustrating tested initial performance of solid-state batteries prepared in an example and Comparative Example 1 of the present disclosure.
As shown in FIGS. 8 and 9 and Table 1, the positive electrode material NCM-811 with the LATP coating layer has a significantly improved initial charge/discharge capacity at both room temperature (25 °C) and 70 °C. In addition, compared with the solid electrolyte Li₆PS₅Cl, the solid electrolyte Li₆PS₅Cl_{α}Br_{β}I_{γ} containing Br and I substitutions can further improve the initial charge/discharge capacity of the solid-state battery.

**Table 1 Initial performance of the solid-state batteries prepared in Examples 1 to 4 and Comparative Example 1**

| | Test Temperature | Initial Charge Capacity (mAh/g) | Initial Discharge Capacity (mAh/g) | Initial Efficiency (%) |
|---|---|---|---|---|
| Comparative Example 1 | Normal temperature (25 °C) | 230.7 | 191.3 | 82.92 |
| | 70 °C | 234 | 202.7 | 86.62 |
| Example 1 | Normal temperature (25 °C) | 238.2 | 207 | 86.90 |
| | 70 °C | 249.5 | 223.9 | 89.74 |
| Example 2 | Normal temperature (25 °C) | 238.2 | 199.4 | 83.69 |
| | 70 °C | 237.2 | 215.1 | 90.6 |
| Example 3 | Normal temperature (25 °C) | 240.3 | 211.5 | 88.01 |
| | 70 °C | 251.6 | 228.4 | 90.78 |
| Example 4 | Normal temperature (25 °C) | 239.7 | 210.1 | 87.65 |
| | 70 °C | 248.2 | 221.9 | 89.40 |

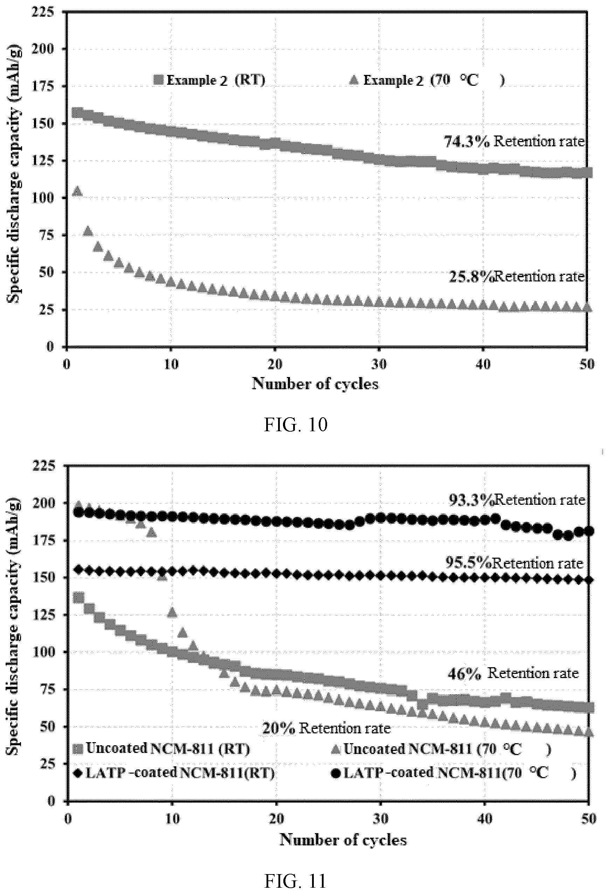

(2) The cycle performance of the solid-state battery was evaluated after 50 charge-discharge cycles at a charge-discharge rate of 0.5C/1.0C (a charge rate of 0.5C and a discharge rate of 1C) at room temperature and 70 °C, separately. The test results are shown in FIGS. 10 and 11. Wherein, FIG. 10 is a diagram illustrating tested cycle performance of a solid-state battery prepared in an example of the present disclosure, and FIG. 11 is a diagram illustrating tested cycle performance of solid-state batteries prepared in an example and Comparative Example 1 of the present disclosure.

As shown in FIGS. 10 and 11, after 50 charge-discharge cycles at a charge-discharge rate of 0.5C/1.0C, the positive electrode material NCM-811 with the LATP coating layer has a capacity retention ratio not lower than 90% and relatively good cycle stability at room temperature (25 °C) and 70 °C; within each of the 50 charge-discharge cycles, the discharge capacity of the positive electrode material NCM-811 with the LATP coating layer is not lower than 200 mAh/g at 70 °C and not lower than 150 mAh/g at room temperature. This shows that the cycle performance of the positive electrode material is significantly improved after surface modification with LATP. In addition, compared with the solid electrolyte Li₆PS₅Cl, the solid electrolyte Li₆PS₅Cl_{α}Br_{β}I_{γ} containing Br and I substitutions can further improve the specific discharge capacity and cycle performance of the solid-state battery.

### Results and Conclusions

1. The LATP coating layer can be successfully formed on the positive electrode material by in-situ synthesis method in the preceding embodiments of the present disclosure.
2. Compared with the positive electrode material with no coating, the positive electrode material whose surface is coated with LATP has significantly improved electrochemical performance (including the rate capability and the cycle performance) at room temperature and 70 °C. Such improvement in performance is achieved through ion-conductive and non-reactive surface coating on the positive electrode material, which indicates that LATP coating helps to reduce the reactivity between the positive electrode plate and the solid-state sulfide electrolyte and prevent a spatial charge layer from being formed between an electrolyte layer and the positive electrode plate.
3. Compared with the solid-state sulfide electrolyte LiₖPₘSₙCl, the solid-state sulfide electrolyte LiₖPₘSₙCl_{α}Br_{β}I_{γ} having different contents of halogen elements has higher conductivity and lower reactivity and can further reduce the effect of the surface charge layer and better match the positive electrode material.

## Claims

1. A solid-state battery, comprising:
a positive electrode plate comprising a positive electrode composite material, a solid-state sulfide electrolyte and a conductive agent, wherein the positive electrode composite material comprises a positive electrode material and a lithium aluminum titanium phosphate, LATP, coating layer formed on a surface of the positive electrode material;
a solid-state sulfide electrolyte layer; and
a negative electrode plate; wherein the solid-state sulfide electrolyte layer is disposed between the positive electrode plate and the negative electrode plate;
wherein the LATP coating layer is obtained in a manner that a lithium source, an aluminum source, a titanium source and a phosphorus source are induced by an in-situ synthesis method using a lithium salt remaining on the surface of the positive electrode material as a directing agent and the lithium source.

2. The solid-state battery according to claim 1, wherein a content of the LATP coating layer is 0.01-15wt% of the positive electrode material.

3. The solid-state battery according to claim 1 or 2, wherein the LATP coating layer has a thickness of 1 nm to 5 µm.

4. The solid-state battery according to claim 3, wherein the LATP coating layer has a thickness of 30 nm to 80 nm.

5. The solid-state battery according to any one of claims 1 to 4, wherein the LATP coating layer comprises at least one selected from Li_{1.3}Al_{0.3}Ti_{1.7}(PO₄)₃, Li₃PO₄, LiH₂PO₄, LiTi₂(PO₄)₃ and LiPO₃.

6. The solid-state battery according to any one of claims 1 to 5, wherein the LATP is Li_{1.3}Al_{0.3}Ti_{1.7}(PO₄)₃.

7. The solid-state battery according to any one of claims 1 to 6, wherein the positive electrode material comprises AₐM_{b}O_{y}, wherein 0 < a ≤ 6, 0 < b ≤ 4, 2 ≤ y ≤ 5, A is an alkali metal element comprising lithium, and M is at least one selected from a transition metal, magnesium, calcium, boron, barium, aluminum and a boron element.

8. The solid-state battery according to claim 7, wherein the transition metal is at least one selected from titanium, vanadium, chromium, molybdenum, tungsten, manganese, iron, cobalt, nickel, palladium, platinum, copper, silver, gold, zinc, cadmium and copper.

9. The solid-state battery according to any one of claims 1 to 8, wherein the positive electrode material comprises at least one selected from LiₓMn₂O₄, LiₓMnO₂, LiₓCoO₂, LiₓV₃O₈, LiₓNiO₂, LiₓNi_{y}Co_{z}O₂, LiₓNi_{y}Mn_{z}O₂ and LiₓCo_{y}Mn_{z}O₂ and/or at least one selected from V₂O₅, V₅S₈, TiS₂, V₂S₅, NbSe₃ and MoS₂, wherein 0.1 < x ≤ 2, 0 < y ≤ 2, 0 < z ≤ 2, and 0.5 < y+z ≤ 2.

10. The solid-state battery according to any one of claims 1 to 9, wherein the positive electrode material is a high-nickel nickel-cobalt-manganese ternary positive electrode material.

11. The solid-state battery according to any one of claims 1 to 10, wherein the solid-state sulfide electrolyte layer comprises at least one of LiₖPₘSₙCl_{α}Br_{β}I_{γ}, Li₇P₃S₁₁, Li_{9.54}Si_{1.74}P_{1.44}S_{11.7}Cl_{0.3}, Li₁₀SnP₂S₁₂, Li₆PS₅Cl, Li₂S-P₂S₅, Li₃PS₄, 75Li₂S-25P₂S₅, 90Li₃PS₄-10ZnO, 9Li₂S-3P₂S₅-1Ni₃S₂, 60Li₂S-25P₂S₅-10Li₃N, 78Li₂S-22P₂S₅, 80(0.7Li₂S-0.3P₂S₅)-20LiI, 99(70Li₂S-30P₂S₅)-1Li₂ZrO₃, Li₇P_{2.9}S_{10.85}Mo_{0.01}, Li₇P_{2.9}S_{10.85}Mo_{0.01}, 70Li₂S-29P₂S₅-1Li₃PO₄, 70Li₂S-29P₂S₅-1P₂S₃, 90(0.7Li₂S-0.3P₂S₅)-10LiBr, 75Li₂S-23P₂S₅-2P₂Se₅, 95(0.8Li₂S-0.2P₂S₅)-5LiI, Li_{10.35}[Sn_{0.27}Si_{1.08}]P_{1.65}S₁₂, Li₁₀GeP₂S₁₂ and Li₁₁AlP₂S₁₂, wherein in LiₖPₘSₙCl_{α}Br_{β}I_{γ}, 5 < k ≤ 6, 0.5 < m ≤ 1.5, 4 < n ≤ 6, 0 < α < 1, 0 ≤ β < 1, 0 ≤ γ < 1, α + β + γ = 1, and β and γ are not 0 at the same time.

12. The solid-state battery according to any one of claims 1 to 11, wherein in LiₖPₘSₙCl_{α}Br_{β}I_{γ}, a coefficient ratio of α, β and γ is (4-10):(0-5):(0-5).

13. The solid-state battery according to any one of claims 1 to 12, wherein the solid-state sulfide electrolyte layer is a layer of LiₖPₘSₙCl_{α}Br_{β}I_{γ}.

14. The solid-state battery according to claim 13, wherein the solid-state sulfide electrolyte layer is a layer of Li₆PS₅Cl_{α}Br_{β}I_{γ}.

15. The solid-state battery according to any one of claims 1 to 14, wherein the negative electrode plate is at least one of a lithium plate, a lithium indium alloy, graphite, silicon, a silicon alloy and silicon dioxide.

16. A method for preparing the solid-state battery according to any one of claims 1 to 15, comprising the following steps:
(1) mixing a hydroxide precursor of a positive electrode material and a first lithium salt , and performing a first calcination so as to obtain the positive electrode material, wherein, the first lithium salt remains on a surface of the positive electrode material;
(2) mixing the positive electrode material with a second lithium salt, Al₂O₃, TiO₂ and a phosphorus salt, and performing a second calcination so as to form an LATP coating layer on the surface of the positive electrode material to obtain a positive electrode composite material;
(3) providing a solid-state sulfide electrolyte;
(4) preparing a positive electrode plate by mixing the positive electrode composite material, the solid-state sulfide electrolyte and a conductive agent;
(5) preparing a solid-state sulfide electrolyte layer; and
(6) preparing the solid-state battery by using the positive electrode plate, the solid-state sulfide electrolyte layer and a negative electrode plate .

17. The method according to claim 16, wherein in step (1), a molar ratio of the first lithium salt to the precursor is (1-1.2): 1.

18. The method according to claim 16 or 17, wherein in step (1), the first calcination is performed at 700-950 °C for 5-24 h.

19. The method according to any one of claims 16 to 18, wherein in step (1), a molar ratio in percentage of the first lithium salt remaining on the surface of the positive electrode material to the positive electrode material is 0.01-0.2%.

20. The method according to any one of claims 16 to 19, wherein in step (2), the phosphorus salt is ammonium phosphate, and a mass ratio of Al₂O₃, TiO₂ and ammonium phosphate is (0.02-0.04):(0.3-0.45):(1.13-1.17).

21. The method according to any one of claims 16 to 20, wherein in step (2), the positive electrode composite material has a particle size of not greater than 3 microns.

22. The method according to any one of claims 16 to 21, wherein in step (2), the second calcination is performed at 400-900 °C for 4-12 h in an O₂/N₂ atmosphere with an oxygen content of 0.5-20v%.

23. The method according to any one of claims 16 to 22, wherein in step (3), a lithium salt, a phosphorus salt, a sulfur salt and a salt having a halogen element are mixed and subjected to third calcination in an inert atmosphere so as to obtain the solid-state sulfide electrolyte LiₖPₘSₙCl_{α}Br_{β}I_{γ}.

24. The method according to any one of claims 16 to 23, wherein the third calcination is performed at 200-800 °C for 2-4 h at a temperature ramp rate of 0.2-5 °C/min.

25. The method according to any one of claims 16 to 24, wherein in step (4), a mass ratio of the solid-state sulfide electrolyte to the positive electrode composite material is 1:(7-10).

26. The method according to claim 25, wherein in step (4), the mass ratio of the solid-state sulfide electrolyte to the positive electrode composite material is 1:(8-9).

27. The method according to any one of claims 16 to 26, wherein in step (4), the positive electrode composite material, LiₖPₘSₙCl_{α}Br_{β}I_{γ} and the conductive agent are mixed so as to prepare the positive electrode plate; and in step (5), LiₖPₘSₙCl_{α}Br_{β}I_{γ} is used for preparing the solid-state sulfide electrolyte layer.

28. A vehicle, comprising the solid-state battery according to any one of claims 1 to 15 or a solid-state battery prepared by the method according to any one of claims 16 to 27.
